# DEMANDE DE BREVET EUROPEEN

(11) **EP 1 213 783 A1**
(43) Date de publication de la demande: **12.06.2002**
(21) Numéro de dépôt: 00204389.1
(22) Date de dépôt: 08.12.2000
(51) Int. Cl.: H01M 10/50, H01M 10/04

(54) **Batterie à électrodes bobinées avec dissipateur de chaleur**

(71) Demandeur: Renata AG, 4452 Itingen (CH)
(72) Inventeur: Exnar, Ivan, 4452 Itingen (CH)
(74) Mandataire: Thérond, Gérard Raymond

(57) **Abrégé**

L'invention concerne une batterie comprenant un container métallique (3) délimitant une cavité (16) contenant un électrolyte-et une bande composite (2) formée par une première feuille métallique revêtue d'un matériau formant l'électrode positive, par une deuxième feuille métallique revêtue d'un matériau formant l'électrode négative et par des séparateurs poreux isolants, ladite bande composite (2) étant enroulée sur un noyau (20) situé au centre de la cavité (16) et lesdites électrodes étant reliées par des moyens de connexion (8, 9) à des bornes extérieures (6, 7). Elle est caractérisée en ce que tout ou partie du noyau central (20) est réalisé en un matériau à coefficient de transmission thermique élevé en contact thermique avec au moins le capot métallique (3) de fermeture.

## Description

La présente invention conceme un accumulateur ou une pile à électrodes bobinées de type "jelly roll", désignée par la suite par le terme générique de "batterie"qui est pourvue d'un agencement permettant de dissiper vers l'extérieur la chaleur dégagée au coeur de la batterie lors de son fonctionnement en opération de charge/décharge ou lors d'un disfonctionnement, par exemple lors d'une mise en court-circuit accidentelle.

L'invention concerne plus particulièrement les batteries de type Li-ion, qu'elles soient cylindriques ou prismatiques, dont la fenêtre de sécurité d'emploi dépend notamment de la tension de charge/utilisation et d'un seuil de température maximale.

Pour maintenir la tension dans la fenêtre de sécurité, située approximativement entre 3 et 4,1 V, on interpose entre les bornes positive et négative un petit circuit électronique permettant de mettre la batterie hors circuit lorsque la tension se situe en dehors de la fenêtre de sécurité.

Dans certaines conditions d'utilisation, il peut se produire une réaction exothermique rapide, plus connue sous le nom de "thermal runaway". Pour maintenir la température en dessous d'un seuil critique, se situant environ à 160°C pour les batteries Lithium-ion, il convient alors d'augmenter les échanges thermiques entre l'intérieur et l'extérieur de la batterie. J.R. Dahn & coll. [Solid State lonics. 69,12. (1964)] a en effet montré qu'au delà d'une température critique les matériaux positif tels que LiₓCoO₂, LiₓNiO₂ ou LiₓMn₂O₄ deviennent instables et se décomposent en dégageant de l'oxygène dont la quantité libérée dépend de la valeur de x. Pour LiₓNiO₂ une valeur de x inférieure à 0,5 devient critique. La stabilité thermique des électrodes négatives, constituées par exemple d'une poudre de graphite, disponible sous la référence MCMB chez Ozaka Gas, avec le difluorure de polyvinyl (PVDF) comme liant dépend de la granulométrie, de la surface et de l'état de lithiation. Entre une température d'environ 120° et 140°C, l'interface solide de l'électrode (SEI) est décomposée et LiₓC (ou lithium métallique non intercalé) réagit avec le liant et avec l'électrolyte. Schématiquement l'issue d'une réaction thermique dans une batterie Li-ion consiste en la décomposition thermique de l'électrolyte à l'électrode négative, en une décomposition thermique de l'électrode positive avec libération d'oxygène et en une réaction entre le liant et l'électrode négative lithiée. Il est donc indispensable de prévoir des moyens pour dissiper la chaleur, pour éviter que les réactions exothermiques au coeur de la batterie ne conduisent à une explosion, voire une inflammation.

Des dispositifs de dissipation de la chaleur ont déjà été proposés pour des batteries, non nécessairement de type Li-ion, mais le plus souvent pour des batteries dont les électrodes sont formées par des séries de plaques parallèles, ou par des séries de cellules individuelles et pour lesquelles une augmentation de volume due à un dispositif de refroidissement ne constitue pas un inconvénient majeur.

De nombreux dispositifs proposent de faire circuler un réfrigérant dans des espaces prévus entre ou autour des plaques ou des cellules. Le document US 4,865,928 décrit une batterie au plomb dans laquelle on fait circuler un réfrigérant dans un tube en forme de U fixé à l'électrode négative. Dans la demande de brevet EP 0 596 778, la circulation de réfrigérant s'effectue entre des flasques en matière plastique hermétiquement thermosoudées respectivement à deux parois opposées. La demande de brevet EP 0 613 204 décrit un mode de réalisation dans lequel un empilement de cellules laisse libres des passages pour la circulation de l'air. Dans le brevet US 5,035 964, la circulation de l'air autour de la batterie est forcée en provoquant des mouvements de convexion dans une enveloppe par un gradient thermique dû à la lumière incidente. Le dispositif de refroidissement décrit dans la demande de brevet EP 0 403 569 pour une batterie au plomb consiste à interposer entre les plaques formant électrodes des plaques conductrices de la chaleur, lesdites plaques conductrices de la chaleur étant reliées à l'extérieur à un dispositif dissipateur de la chaleur pourvu d'ailettes.

Aucun des dispositifs évoqués ci-dessus n'est adaptable à une batterie à électrodes enroulées.

L'invention a donc pour objet de procurer un système de refroidissement depuis le coeur d'une batterie à électrodes enroulées.

A cet effet, une batterie selon l'invention comprend un container métallique contenant un électrolyte et une bande composite formée par une première feuille métallique revêtue d'un matériau actif formant l'électrode positive, par une deuxième feuille métallique revêtue d'un matériau actif formant l'électrode négative et par un ou plusieurs séparateurs poreux isolants, ladite bande composite étant enroulée sur un noyau situé au centre du container et lesdites électrodes étant reliées par des moyens de connexion à des bornes extérieures positive et négative. La batterie est caractérisée par le fait que tout ou partie du noyau central est réalisé en un matériau à coefficient de transmission thermique élevé en contact thermique avec au moins le capot métallique de fermeture.

D'autres caractéristiques et avantages de la présente invention apparaîtront dans la description suivante en référence aux dessins annexés dans lesquels :
- la figure 1 représente en perspective éclatée un premier mode de réalisation de l'invention pour une batterie de type prismatique,
- les figures 2 et 3 sont des variantes de réalisation de la batterie représentée à la figure 1,
- la figure 4 représente en perspective éclatée un deuxième mode de réalisation de l'invention pour une batterie de type bâton, et
- la figure 5 est la représentation en coupe d'un exemple d'enroulement de matériaux actifs pour une batterie représentée aux figures 1 à 3.

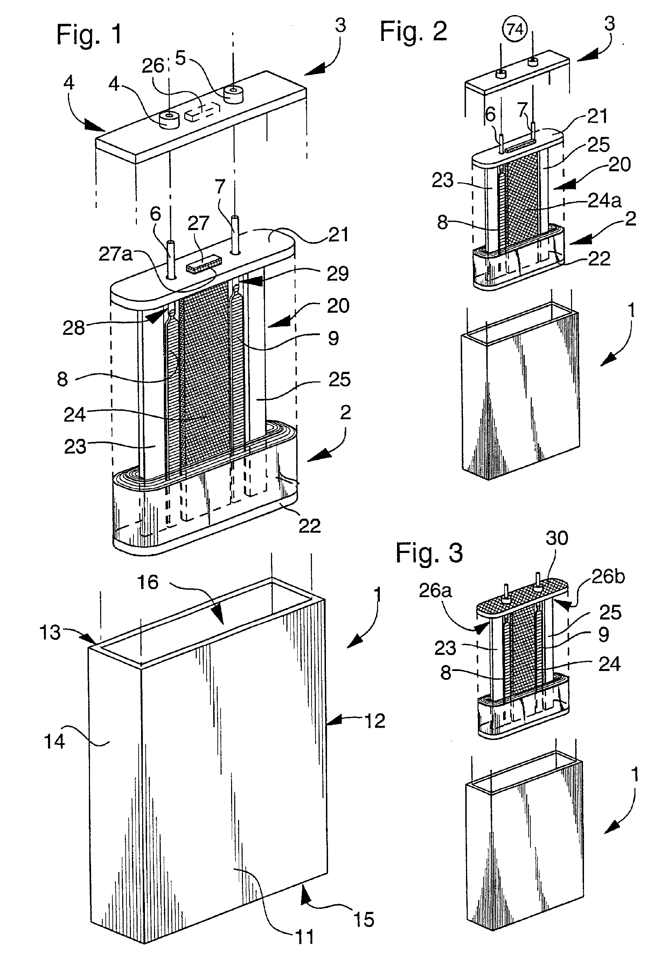

A la figure 1, on a représenté en perspective éclatée les trois parties essentielles d'une batterie prismatique à enroulement bobiné, à savoir un container métallique 1, un enroulement spiral 2 autour d'une bobine 20, et un capot métallique de fermeture 3. Le container métallique 1 est formé d'un élément tubulaire comprenant deux grandes parois 11, 13, deux petites parois 12, 14 et un fond rectangulaire 15 délimitant une cavité 16 destinée à recevoir l'enroulement spiral 2 de matériaux actifs de type "jelly roll" imprégné d'un électrolyte, l'ensemble étant ensuite scellé hermétiquement par le capot 3 sur lequel sont prévus deux zones de contact 4, 5 électriquement isolées du capot et à travers lesquelles passent les bornes 6, 7. La bobine 20 autour de laquelle est disposé l'enroulement 2, représenté partiellement par sa partie inférieure, est du type de celle décrite dans la demande de brevet européen EP 0 948 072 au nom de la demanderesse et incorporée par référence dans la présente demande.

La bobine 20 comprend un plateau supérieur 21, un plateau inférieur 22 ayant tous deux sensiblement les dimensions de l'ouverture du container 1, ces deux plateaux étant réunis par deux isthmes latéraux étroits 23, 25. Cette partie de la bobine est réalisée en un matériau plastique isolant, par exemple par injection ou moulage. La bobine 20 comprend dans sa partie centrale un troisième isthme 24 réalisé en un matériau à coefficient de transmission thermique élevé. Le troisième isthme 24, situé au coeur de la bobine 20 est plus large que les isthmes latéraux 23, 25 et suffisamment éloigné de ceux-ci pour ménager des évidements 28, 29 destinés à recevoir des moyens de connexion 8, 9 entre les électrodes et les bornes 4, 5, sans être en contact électrique avec l'isthme central 24. Ces moyens de connexion sont constitués par une tige ou tube métallique aplati, par exemple en aluminium par l'anode et en cuivre pour la cathode. Comme on le voit sur la figure 1, l'isthme central 24 possède une extension 27 qui traverse le plateau supérieur 21 à travers une ouverture 27a pratiquée dans celui-ci. Ainsi, après avoir mis en place l'enroulement bobiné 2 dans le container 1 et ajouté la quantité nécessaire d'électrolyte, lorsqu'on emboîte le capot 3, l'extension 27 vient en contact avec la surface inférieure du capot 3 et permet ainsi d'établir un pont thermique non seulement avec le capot 3 mais aussi avec le container 1 auquel le capot 3 est soudé. Pour rendre plus efficace le pont thermique, il est possible de prévoir dans la surface inférieure du capot 3 un logement 26 dans lequel viendra s'engager l'extension 27 de l'isthme centrale 24. Le container métallique 1 et le capot 3 peuvent être réalisés de façon connue en acier qui est un bon conducteur thermique. Ils peuvent également être réalisés en aluminium, également bon conducteur thermique et dont la moins bonne résistance mécanique aux pressions dues au réactions chimiques à l'intérieur de la batterie peut être compensée par un estampage des grandes parois 11, 13, comme cela est décrit dans la demande de brevet EP 0 948 064 au nom de la demanderesse incorporée dans la présente demande par référence.

Le matériau constituant l'isthme central 24 peut être également en acier ou en aluminium ainsi qu'en d'autres métaux bon conducteur de la chaleur tels que le cuivre, le nickel ou le titane.

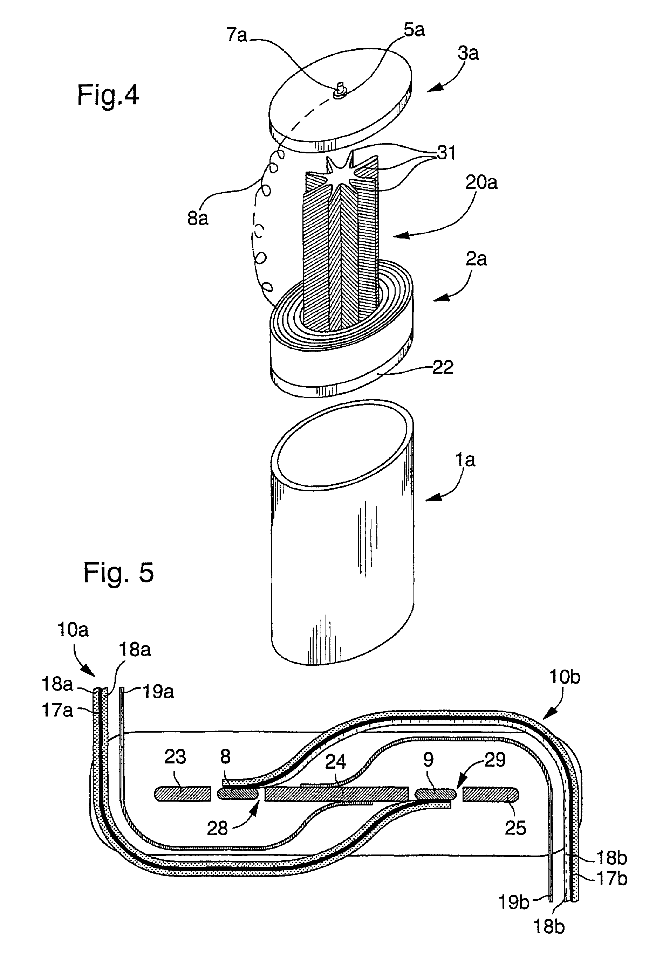

Pour éviter une éventuelle attaque de l'isthme central par l'électrolyte, il est possible de le revêtir d'un très mince film plastique ou d'une très fine couche de vernis isolant, dont l'influence sera négligeable sur la conduction thermique. Ce revêtement présente également l'avantage de constituer une isolation électrique de sécurité entre l'isthme central 24 et les moyens de connexion ou les bandes de l'enroulement 2, décrit plus en détails ci-après en référence à la figure 5.

Dans le mode de réalisation représenté, l'enroulement 2 sur la bobine 20 est formé à partir de deux bandes composites 10a et 10b de structures analogues et positionnées de part et d'autre de la bobine de façon à pouvoir être enroulées toutes les deux dans le même sens. Une première bande 10a formant l'anode comprend un support 17a formé par une mince bande métallique en cuivre (environ 0,01 mm) dont les deux faces sont revêtues d'un matériau actif 18a consistant par exemple en une poudre de graphite amalgamée et dont l'extrémité est mise en contact électrique, par soudage ou autre procédé, avec le moyen de connexion 9. De même, une deuxième bande 10b comprend une mince bande métallique en aluminium 17b dont les deux faces sont revêtues d'un matériau actif 18b consistant par exemple en un amalgame de LiCoO₂. Ces deux bandes 10a, 10b comprennent en outre chacune un séparateur poreux 19a, 19b en forme de bande collée respectivement de part et d'autre des isthmes 23, 24 et 25 de façon à s'interposer entre l'isthme central 25 et les bandes composites 10a, 10b. Ces séparateurs peuvent par exemple être collés sur les faces opposées de l'isthme central 24 comme représenté sur la figure 5, ou sur les faces des isthmes latéraux 23, 25 après avoir été engagés dans les évidements 28, 29. Il est bien évident que d'autres types d'enroulements et d'autres matériaux actifs peuvent être utilisés sans sortir du cadre de l'invention.

En se référant maintenant à la figure 2, on a représenté une variante du mode de réalisation qui vient d'être décrit. Dans beaucoup de batteries, il est très usuel que le container métallique constitue un des pôles positif ou négatif de la batterie. En pareil cas, il est possible d'augmenter encore la surface d'échange thermique à l'intérieur de la batterie en confondant en un seul élément 24a l'isthme central 24 et un moyen de connexion, par exemple l'élément de connexion 9 comme représenté sur la figure 2. La feuille métallique support 17a ou 17b de l'électrode soudée à cet isthme central 24a élargi permet également de drainer la chaleur produite à l'intérieur de la batterie à travers ledit isthme central 24a pour être dissipée par l'enveloppe extérieure formée par le container 1 et le capot 3.

A la figure 3, on a représenté une deuxième variante de réalisation dans laquelle le capot 3 et la plateau supérieur 21 sont confondus en un unique élément de fermeture 30 du container 1, cet élément de fermeture étant évidemment métallique. Pour assurer le positionnement des isthmes latéraux 23, 25 en matériau non conducteur thermique ou électrique, des logements d'encliquetage 26a, 26b sont prévus dans la face inférieure de l'élément de fermeture 30.

Selon une autre variante, non représentée, il est possible de combiner les deux variantes précédentes en ayant à la fois, d'une part l'isthme central 24 et un moyen de connexion 8 ou 9 confondus, d'autre part le capot 3 et le plateau supérieur 21 également confondus.

La description qui précède a été faite essentiellement en référence à une batterie de type prismatique. En se référant à la figure 4, on voit que le dispositif selon l'invention pour l'extraction de la chaleur du coeur d'une batterie est également adaptable à une batterie de type bâton, c'est-à-dire une batterie dont le container métallique 1a est cylindrique, l'enroulement de matériaux actifs 2a est effectué sur une bobine dont les surfaces extérieures délimitent un cylindre, et dont le capot 3a est en forme de disque. La bobine 20a est réalisé, comme l'isthme 24 du premier mode de réalisation, en un matériau ayant un coefficient de transmission thermique élevé et les échanges thermiques sont facilités par une configuration en étoile formée par des ailettes radiales 31. Comme dans la variante réunissant les caractéristiques des figures 2 et 3, une des bandes composites de l'enroulement 2a est reliée à la bobine 20a elle-même en contact thermique et électrique avec le capot 3a pour permettre à la fois de dissiper la chaleur depuis le coeur de la batterie et former l'une des bornes positive ou négative de la batterie. Dans le mode de réalisation représenté, l'autre bande composite de l'enroulement est reliée par un conducteur 8a, soudé à la feuille métallique de la bande à une borne 7a située sur le couvercle et isolé de celui-ci par un manchon isolant 5a.

Les modes de réalisation qui viennent d'être décrits sont susceptibles d'être adaptés par l'homme de l'art, par exemple pour tenir compte de la forme spécifique d'une batterie, sans sortir du cadre de la présente invention.

## Revendications

1. Batterie comprenant un container métallique (1) délimitant une cavité (16) contenant un électrolyte et une bande composite (2) formée par une première feuille métallique (17a) revêtue d'un matériau actif (18a) formant l'électrode positive par une deuxième feuille métallique (17b) revêtue d'un matériau actif (18b) formant l'électrode négative et par un ou plusieurs séparateurs poreux isolants (19a, 19b), ladite bande composite (2) étant enroulée sur un noyau (20, 20a) situé au centre de la cavité (16) et lesdites électrodes étant reliées par des moyens de connexion (8, 9) à des bornes extérieures (6, 7) positive et négative traversant un -capot métallique (3) de fermeture du container (1), **caractérisé en ce que** tout ou partie du noyau central (20, 20a) est réalisé en un matériau à coefficient de transmission thermique élevé en contact thermique avec au moins le capot métallique (3) de fermeture.

2. Batterie selon la revendication 1, **caractérisée en ce que** le container métallique (1) est de forme prismatique, la cavité étant délimitée par deux grandes parois (11, 13), deux petites parois (12, 14) et un fond (15), et **en ce que** le noyau central (20) est formé par une bobine rigide comprenant un plateau supérieur (21) et un plateau inférieur (22) ayant sensiblement les dimensions du fond (5), lesdits plateaux (21, 22) étant réunis par des isthmes (23, 24, 25) séparés par des ouvertures (28, 29), l'un au moins desdits isthmes (23, 24, 25) étant en un matériau conducteur thermique en contact avec le capot (3).

3. Batterie selon la revendication 2, **caractérisée en ce que** la bobine comporte deux isthmes latéraux étroits (23, 25) réalisés en un matériau isolant et un isthme central (24) réalisé en un matériau conducteur thermique, les ouvertures (28, 29) entre les isthmes étant occupées par les moyens de connexion (8, 9).

4. Batterie selon la revendication 3, **caractérisée en ce qu'**un des moyens de connexion (8 ou 9) est confondu avec l'isthme central (24).

5. Batterie selon la revendication 2, **caractérisée en ce que** le capot métallique (3) est confondu avec le plateau supérieur (21) de la bobine.

6. Batterie selon la revendication 1, **caractérisée en ce que** le container (3) est de forme cylindrique et **en ce que** le noyau central (20a) a une structure à ailettes radiales (31) et constitue un des moyens de connexion à une borne extérieure.

7. Batterie selon la revendication 1, **caractérisé en ce que** le matériau à coefficient de transmission thermique élevée est choisi parmi le cuivre, l'aluminium, le nickel, le titane et l'acier.
